# EUROPEAN PATENT APPLICATION

(11) **EP 4 704 456 A1**
(43) Date of publication of application: **04.03.2026**
(21) Application number: 24196371.9
(22) Date of filing: 26.08.2024
(51) Int. Cl.: H04W 12/30, H04W 8/20, H04W 12/40

(54) **SECURE ELEMENT AND METHOD OF CONFIGURING THE SAME**

(71) Applicant: NXP B.V., 5656 AG Eindhoven (NL)
(72) Inventor: Nitsch, Nils Frederik, 5656 AG Eindhoven (NL)
(74) Representative: Krott, Michel

(57) **Abstract**

In accordance with a first aspect of the present disclosure, a secure element is provided, comprising: a storage unit configured to store a pre-loaded data structure for a profile, wherein the pre-loaded data structure comprises first data and one or more placeholders for second data, wherein said first data are common data, and said second data are data which are specific to the profile; a processing unit configured to insert, upon or after receiving said profile including the second data from an external entity, said second data into the placeholders. In accordance with a second aspect of the present disclosure, a corresponding method of configuring a secure element is conceived.

## Description

### TECHNICAL FIELD

The present disclosure relates to a secure element. Furthermore, the present disclosure relates to a corresponding method of configuring a secure element.

### BACKGROUND

Some communication devices, such as smart phones, typically contain one or more secure elements. An example of such a secure element is a so-called "embedded universal integrated circuit card" (eUICC), which may be an embedded functional component that implements the same functionality as a traditional, removable subscriber identity module (SIM). Accordingly, a secure element may for example be a functional component (e.g., a component primarily implemented as software) that is installed in an embedded chip, more specifically in a tamper-resistant integrated circuit having a prescribed level of security. A secure element may implement security functions, such as cryptographic functions and authentication functions. Furthermore, a profile may be stored in a secure element, in order to enable the aforementioned functionality. A secure element may also be a system of separate components integrated into a chip, wherein said components have different levels of security. For example, a so-called "integrated universal integrated circuit card" (iUICC) is a highly secure piece of hardware integrated into a chip (e.g., into a so-called system-on-chip, SoC), and using other parts of that chip, such as a (less secure) memory that is external to the iUICC. In that case, although the memory is less secure than the iUICC, the combination of the iUICC and the memory may be regarded as a secure element of the kind set forth.

### SUMMARY

In accordance with a first aspect of the present disclosure, a secure element is provided, comprising: a storage unit configured to store a pre-loaded data structure for a profile, wherein the pre-loaded data structure comprises first data and one or more placeholders for second data, wherein said first data are common data, and said second data are data which are specific to the profile; a processing unit configured to insert, upon or after receiving said profile including the second data from an external entity, said second data into the placeholders.

In one or more embodiments, the placeholders contain dummy data, and wherein the processing unit is configured to substitute, upon or after receiving said profile, the dummy data with the second data.

In one or more embodiments, the second data contain one or more secret keys.

In one or more embodiments, the second data contain a unique identifier of the secure element.

In one or more embodiments, the processing unit is further configured to remove the pre-loaded data structure from the storage unit upon or after receiving an instruction from the external entity.

In one or more embodiments, the storage unit is a non-volatile memory.

In one or more embodiments, the first data contain an applet code.

In one or more embodiments, the secure element is an embedded universal integrated circuit card (eUICC).

In one or more embodiments, the processing unit is configured to detect one or more first markers in the received profile, wherein said first markers precede the second data contained in said profile.

In one or more embodiments, the processing unit is configured to detect one or more second markers in the received profile, wherein said second markers precede the first data contained in said profile.

In one or more embodiments, the second data are diversified data which are unique for the profile.

In accordance with a second aspect of the present disclosure, a method of configuring a secure element is conceived, comprising: providing the secure element with a storage unit configured to store a pre-loaded data structure for a profile, wherein the pre-loaded data structure comprises first data and one or more placeholders for second data, wherein said first data are common data, and said second data are data which are specific to the profile; providing the secure element with a processing unit configured to insert, upon or after receiving said profile including the second data from an external entity, said second data into the placeholders.

In one or more embodiments, the placeholders contain dummy data, and the processing unit is configured to substitute, upon or after receiving said profile, the dummy data with the second data.

In one or more embodiments, the second data contain one or more secret keys.

In one or more embodiments, the second data contain a unique identifier of the secure element.

### DESCRIPTION OF DRAWINGS

Embodiments will be described in more detail with reference to the appended drawings.
Fig. 1 shows an illustrative embodiment of a secure element.
Fig. 2 shows an illustrative embodiment of a method of configuring a secure element.
Fig. 3 shows an illustrative embodiment of a process for loading a profile.
Fig. 4 shows an illustrative embodiment of sub-steps of said process for loading a profile.
Fig. 5 shows an illustrative embodiment of a skeleton profile.
Fig. 6 shows an illustrative embodiment of a diversified profile.
Fig. 7 shows an illustrative embodiment of an extended diversified profile.
Fig. 8 shows another illustrative embodiment of an extended diversified profile.

### DESCRIPTION OF EMBODIMENTS

Nowadays, removable SIMs are often replaced by so-called eUICCs. This fits into the trend of developing so-called embedded SIM (eSIM) technology, which transforms the traditional plastic SIM into an electronical dataset called "profile". A profile may be regarded as a collection of resources associated with a particular user. For example, a mobile network operator (MNO) may associate the profile with said user in its network and billing systems, upon contract establishment and when sending an eSIM, respectively. Specifically, a profile may include at least one of a file system, one or more network access credentials, one or more applications and data related to or operated upon by said applications. In operation, a communication device may for example retrieve access credentials contained in such a profile, with the purpose of connecting the communication device to a cellular network.

More specifically, eSIM technology allows the MNO to easily download and install such a profile into an embedded secure element (i.e., eUICC) in a connected device (e.g., a mobile phone). Since mobile devices are often put on the market without an installed profile, they need connectivity to acquire their profile from the contracted MNO. Therefore, device manufacturers often want to equip their devices with cellular connectivity before issuance - so-called "Bootstrap Connectivity". The main purpose is to give the end user directly upon startup the possibility to connect to a server to download a profile from his contracted MNO. This bootstrap profile is loaded onto the eUICC during the production process, i.e. before issuance.

Factory processes are highly efficient, time-critical processes. The GSM Association (GSMA) is currently defining an architecture according to which an eSIM profile, which is usually loaded by the user once the mobile device is deployed in the field, can also be loaded within factory processes. However, in such a case the loading of the profile - which typically takes 30 to 60 seconds - takes too much time, and will significantly decrease the efficiency of a factory process. Even with parallel production lines, producing millions of devices per month, the time needed to load such a profile influences the entire process.

Now discussed are a secure element and a corresponding method of configuring a secure element, which facilitate loading an initial profile - for example, a bootstrap profile - into the secure element, with a minimal negative impact on the efficiency of the production process of said secure element.

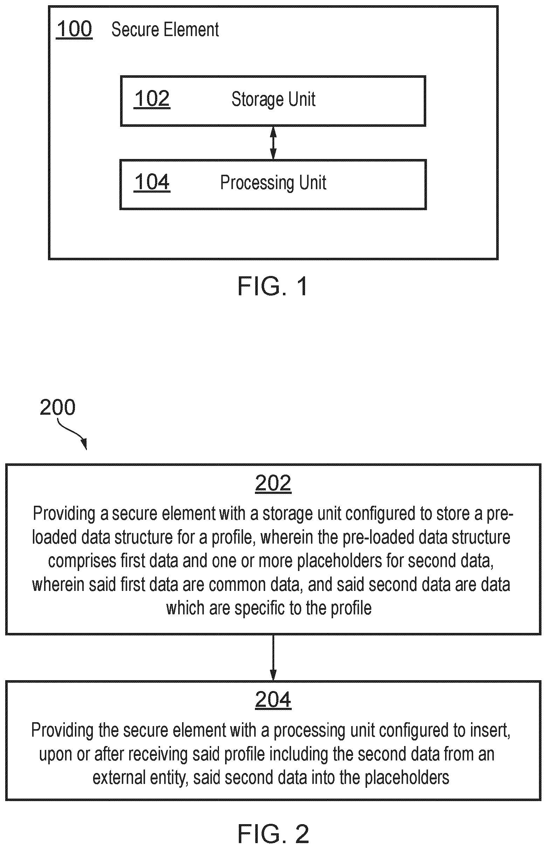

**Fig. 1** shows an illustrative embodiment of a secure element 100. The secure element 100 comprises a storage unit 102 and a processing unit 104, which are operatively coupled to each other. The storage unit 102 is configured to store a pre-loaded data structure for a profile, wherein the pre-loaded data structure comprises first data and one or more placeholders for second data, wherein said first data are common data, and said second data are data which are specific to the profile 100. Furthermore, the processing unit 104 is configured to insert, upon or after receiving said profile including the second data from an external entity, said second data into the placeholders. In a practical implementation, the secure element 100 is an eUICC. Alternatively, the secure element may be a combination of an iUICC and a memory implemented on an SoC, as explained above. In that case, the processing unit 104 is formed by the iUICC of the SoC, and the storage unit 102 is formed by the memory of the SoC.

In this way, a complete, initial profile may be loaded in the secure element 100 in two steps. First, during production of the secure element 100, the pre-loaded data structure may be stored in the secure element 100. This pre-loaded data structure contains common data (i.e., 'static' data which the profile stored in the secure element 100 may have in common with the profiles stored in other secure elements), as well as placeholders for data that are specific to the profile (i.e., 'diversified' data which are unique for the profile stored in the secure element). Since the pre-loaded data structure contains only common data and placeholders, it can be stored relatively quickly, and thus this storing operation has a minimal negative impact on the efficiency of the production process. The insertion of the diversified, secure element-specific data into the placeholders may be then be performed by the manufacturer of the mobile device in which the secure element is installed, thereby completing the loading of a complete profile on the mobile device. Accordingly, the loading of an initial profile into the secure element, with a minimal negative impact on the efficiency of the production process of said secure element, is facilitated.

It is noted that common data (i.e., data which are shared between multiple profiles) typically form the largest part of a profile, while diversified data (i.e., which are different for each profile) typically forms only a small part of said profile. Therefore, the number of placeholders does not need to be large, and the insertion of the diversified data into said placeholders does not require much time and processing resources. An example of common data is Java Card applet code. Examples of diversified data are secret keys (e.g., for network authentication) or identifiers. Specifically, examples of such identifiers are the International Mobile Subscriber Identity (IMSI) and the Integrated Circuit Card ID (ICCID), as defined in *SGP.22* - *RSP Technical Specification,* version 2.5, published by the GSMA on 26 May 2023. Furthermore, storing data in a persistent (i.e., non-volatile) memory is typically the most time-consuming operation during a profile download.

Therefore, an eUICC manufacturer (EUM) may already store the pre-loaded data structure having all the static (i.e., non-diversified) data stored therein into the eUICCs on the wafers, i.e. when they are being produced (e.g., using a Golden sample process). It is noted that the pre-loaded data structure may have previously agreed upon with the MNO. The fields which will be diversified later (i.e., the placeholders) may be kept empty. For example, the corresponding parts of the data structure may be created on the eUICC but filled with dummy values (e.g., all zeros). Those eUICCs containing the pre-loaded data structure may be shipped to an OEM, which then receives from the same MNO (or from the EUM on behalf of MNO) the same digital data structure, but now containing diversified data. Then, the OEM may load each diversified profile onto the prepared eUICCs, in particular by identifying diversified data in said digital data structure and inserting said diversified data into the placeholders contained in the pre-loaded data structure. Since the static data in the pre-loaded data structure do not need to be updated by the OEM, significantly less memory updates are needed, which results in an efficient profile loading process.

In one or more embodiments, the placeholders contain dummy data, and the processing unit is configured to substitute, upon or after receiving said profile, the dummy data with the second data. This results in a practical implementation of the placeholders. In addition, dummy data may easily be detected, thus facilitating the insertion of said second data into the placeholders. In one or more embodiments, the second data contain one or more secret keys. In this way, secret keys may easily be loaded in a pre-loaded data structure of the kind set forth. Furthermore, in one or more embodiments, the second data contain a unique identifier of the secure element. In this way, a unique identifier of the secure element may easily be loaded in a pre-loaded data structure of the kind set forth.

In one or more embodiments, the processing unit is further configured to remove the pre-loaded data structure from the storage unit upon or after receiving an instruction from the external entity. In this way, unnecessary pre-loaded data structures (e.g., stored on a secure element for which no profile with second data has been received) may easily be removed. In a practical implementation, the storage unit is a non-volatile memory. Furthermore, in a practical implementation, the first data contain an applet code. Such applet code is a typical example of common data, i.e., data which are shared between multiple secure elements.

In one or more embodiments, the processing unit is configured to detect one or more first markers in said profile, wherein said first markers precede the second data contained in the received profile. In this way, the efficiency of the profile loading may be increased, because the processing unit may easily detect the presence of said second data in the received profile, and subsequently insert those second data into the placeholders of the pre-loaded data structure. Furthermore, in one or more embodiments, the processing unit is configured to detect one or more second markers in the received profile, wherein said second markers precede the first data contained in said profile. In this way, the efficiency of the profile loading may be further increased, because the processing unit may easily detect the parts of the received profile that do not contain data that should be inserted in pre-loaded data structure, and thus refrain from processing said parts.

**Fig. 2** shows an illustrative embodiment of a method 200 of configuring a secure element. The method 200 comprises the following steps. At 202, a secure element is provided with a storage unit configured to store a pre-loaded data structure for a profile, wherein the pre-loaded data structure comprises first data and one or more placeholders for second data, wherein said first data are common data, and said second data are data which are specific to the profile. Furthermore, at 204, the secure element is provided with a processing unit configured to insert, upon or after receiving said profile including the second data from an external entity, said second data into the placeholders. As explained with reference to the corresponding secure element shown in Fig. 1, the method facilitates the loading of an initial profile into the secure element, with a minimal negative impact on the efficiency of the production process of said secure element.

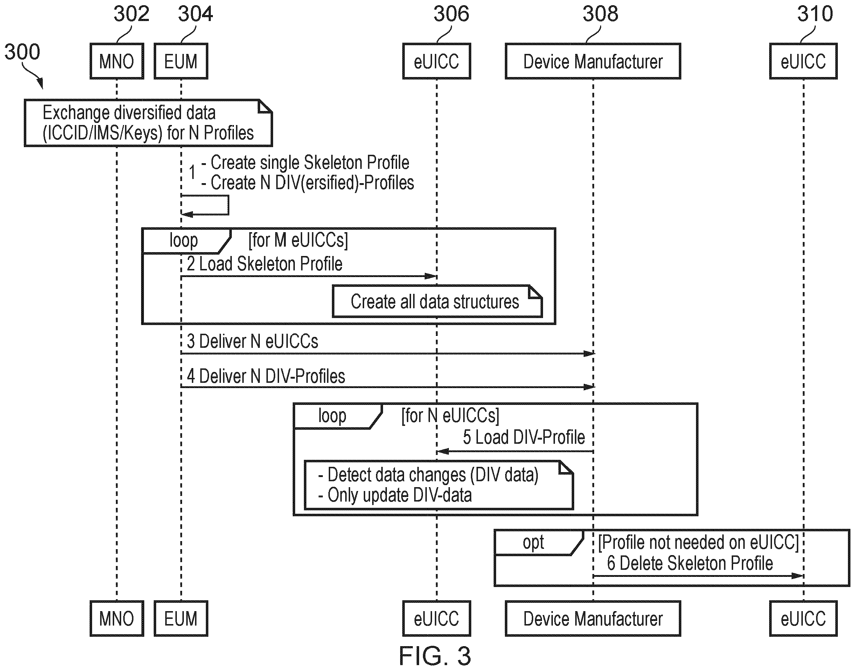

**Fig. 3** shows an illustrative embodiment of a process 300 for loading a profile. Before the process 300 starts, an MNO 302 and EUM 304 agree on and exchange diversified data for N profiles (e.g., IMSI, ICCID and keys). Then, the EUM 304 creates a single data structure, which will be pre-loaded on a plurality of eUICCs, which are included in a set of eUICCs 306. This pre-loaded data structure may also be referred to as a "skeleton profile". The skeleton profile is a data structure in which common data are already stored, but that does not yet contain diversified data. Instead, the data fields in which the diversified data will be stored may be kept empty or contain dummy data. In addition, the EUM 304 creates N profiles having the same data structure, but already including the diversified data. These profiles will be provided to each eUICC, on which the profile needs to be installed.

Next, the EUM 304 pre-loads the skeleton profile on the plurality of eUICCs. It is possible that not all eUICCs of the full set of eUICCs 306 will be provided with a profile. In other words, the EUM 304 pre-loads the skeleton profile on M eUICCs, where M ≥ N. Then, the EUM 304 delivers the M produced eUICCs, each of which having a pre-loaded skeleton profile, to the device manufacturer (DM) 308. Furthermore, the EUM 304 delivers N diversified profiles to the DM 308. Next, the DM 308 chooses the eUICCs on which a diversified profile should be installed, and loads one diversified profile (DIV-Profile) on each chosen eUICC. Then, the eUICC may detect the differences between the received diversified profile and the pre-loaded skeleton profile, and perform updates to the data fields reserved for the diversified data (DIV-data). It is noted that the eUICC may refrain from updating all content of the diversified, which is not different compared to the pre-loaded skeleton profile (i.e., all content that represents common data). Thus, this step is relatively efficient. Optionally, the DM 308 may delete the skeleton profile on the subset of eUICCs 310 that did not receive a diversified profile, if applicable. The skilled person will appreciate that the process 300 shown in Fig. 3 represents a non-limiting example of how a profile can be loaded.

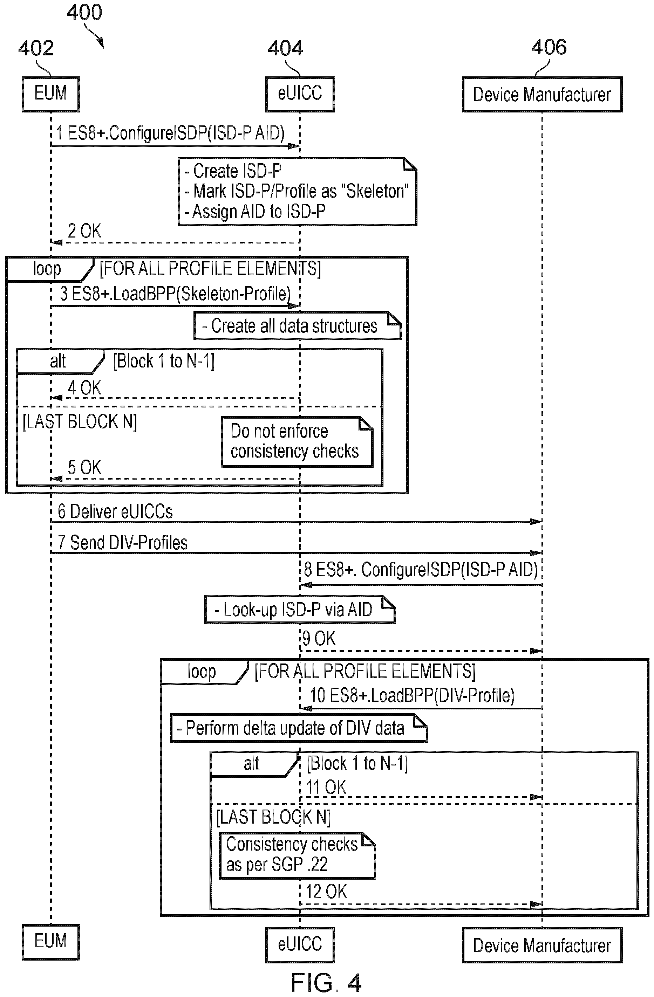

**Fig. 4** shows an illustrative embodiment of sub-steps 400 of said process for loading a profile, i.e., of the process shown in Fig. 3. In particular, more details are shown of the step of pre-loading the skeleton profile on the eUICCs 404, and of the step of loading the diversified profile on the eUICCs 404. In accordance with the above-mentioned *SGP. 22* - *RSP Technical Specification,* the step of pre-loading the skeleton profile may include the pre-step of issuing an "ES8+.ConfiguresISDP" command by the EUM 402. This command can be enriched with proprietary data. For example, in accordance with the present disclosure, this proprietary information may be an Application Identifier (AID), which may be assigned to a newly created Issuer Security Domain Profile (ISD-P). If the AID has not yet been assigned to another ISD-P, the eUICC creates the ISD-P with an internal "skeleton" marker and assigns the given AID. Next, the skeleton profile may be loaded, again in accordance with the *SGP.22* - *RSP Technical Specification,* via multiple ES8+.LoadBPP commands. Finally, an SGP.22-based consistency check may be performed.

The step of loading the diversified profile on the eUICCs 404 may contain the following sub-steps. Again, the "ES8+.ConfigureISDP" command may be issued. In this case, the command is issued by the DM 406. Again, the command contains the AID assigned to the newly created ISD-P. Then, the eUICCs 404 may perform an internal look-up of the ISD-P with a given AID, which may be used for updates of the diversified data in the next sub-steps. Next, the diversified profiles may be loaded on the eUICCs 404. Finally, an SGP.22-based consistency check may be performed.

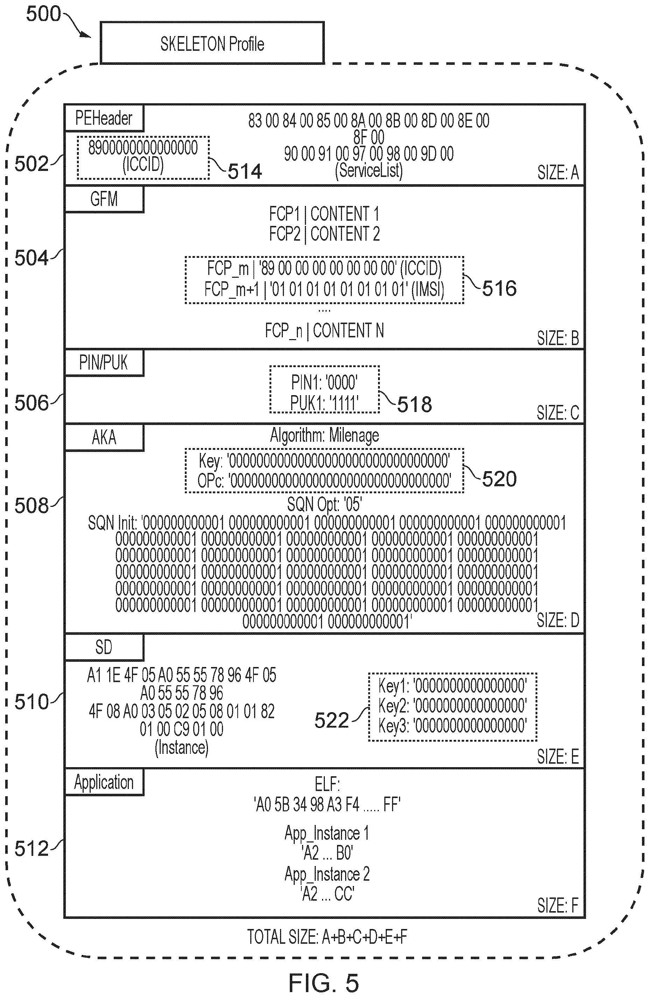

**Fig. 5** shows an illustrative embodiment of a skeleton profile 500. The skeleton profile 500, which is a data structure that can be pre-loaded in an eUICC, contains multiple sections containing different types of data. These sections include a profile element header section 502, a GFM section 504, a PIN/PUK section 506, an AKA section 508, an SD section 510, and an application section 512. It is noted that these sections are based on the technical specification *eUICC Profile Package: Interoperable Format Technical Specification,* version 3.3.1, published by the Trusted Connectivity Alliance in July 2023. This specification defines the interoperable profile format for eSIMs. The generic file management (GFM) section defines the file system of the profile. Furthermore, the PIN/PUK section is a data element for defining PINs and PUKs for a profile according to ETSI and 3GPP specifications. Furthermore, the authentication and key agreement (AKA) section is used to set parameters for network authentication. Finally, the security domain (SD) section is used for installing and configuring security domains of a profile, including their secret keys.

The skeleton profile 500 contains the data structure of a full profile, including the common data which are stored in said structure, and which are the same for a plurality of eUICCs. However, the diversified data (e.g., secret keys, ICCID, IMSI), which are unique to a specific one of said eUICCs, are not yet stored in the skeleton profile 500. Instead, the skeleton profile 500 contains placeholders for these diversified data. In this example, the placeholders are implemented as data elements whose value is set to dummy values 514, 516, 518, 520, 522 (e.g., `00'). The skeleton profile 500 may be stored in the non-volatile memories of said plurality of eUICCs. These eUICCs may be of the same type, order or batch, for example.

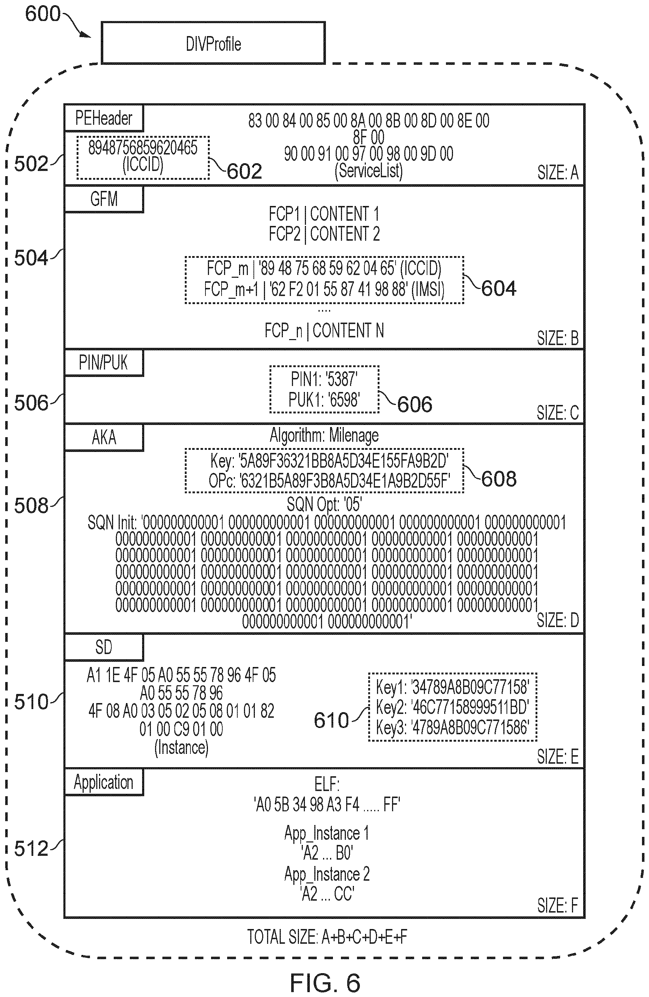

**Fig. 6** shows an illustrative embodiment of a diversified profile 600, referred to as a "DIV Profile". In accordance with the present disclosure, diversified data 602, 604, 606, 608, 610 have been inserted into the placeholders of the skeleton profile as shown in Fig. 5. The diversified data 602, 604, 606, 608, 610 are data which are specific to the profile loaded into the secure element. As mentioned above, the diversified data contain, for example, secret keys, an ICCID, and an IMSI.

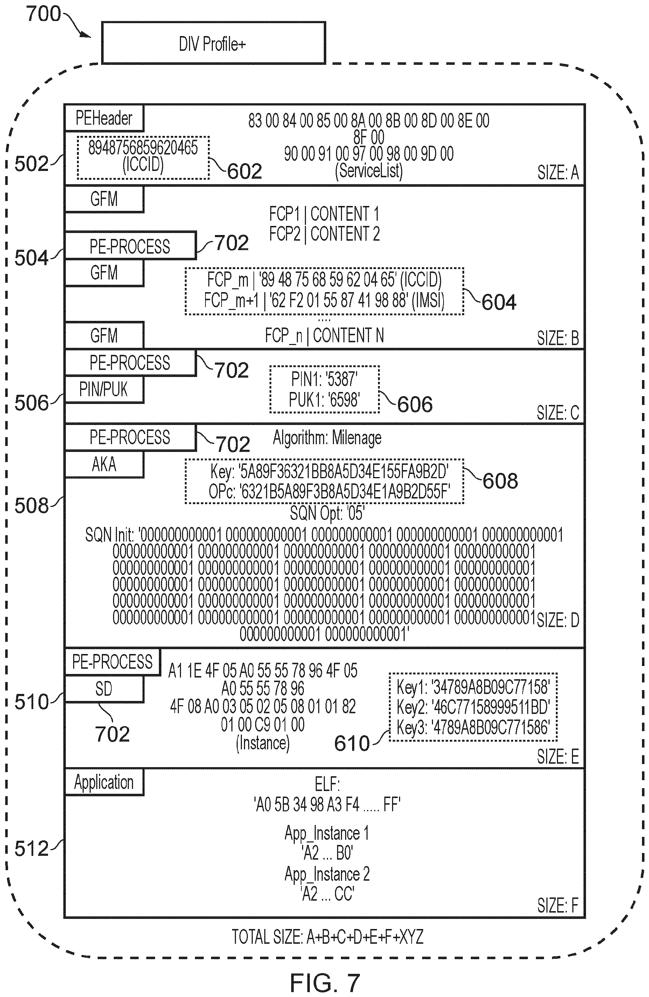

**Fig. 7** shows an illustrative embodiment of an extended diversified profile 700, referred to as "DIV Profile+". Again, diversified data 602, 604, 606, 608, 610 have been inserted into the placeholders of the skeleton profile as shown in Fig. 5. The diversified data 602, 604, 606, 608, 610 are data which are specific to the profile loaded into the secure element. As mentioned above, the diversified data contain, for example, secret keys, an ICCID, and an IMSI. In addition, the extended diversified profile 700 contains a first marker 702 of the kind set forth above, which is named "PE-PROCESS". In particular, the first marker 702 precedes the diversified data 602, 604, 606, 608, 610 which are contained in the diversified profile 700. By means of the first marker 702 a processing unit of an eUICC may easily detect the presence of the diversified data 602, 604, 606, 608, 610, and subsequently insert them into the placeholders of the skeleton profile. This may result in a performance improvement of the eUICC, in the sense that the diversified profile 700 may be loaded more quickly on the eUICC.

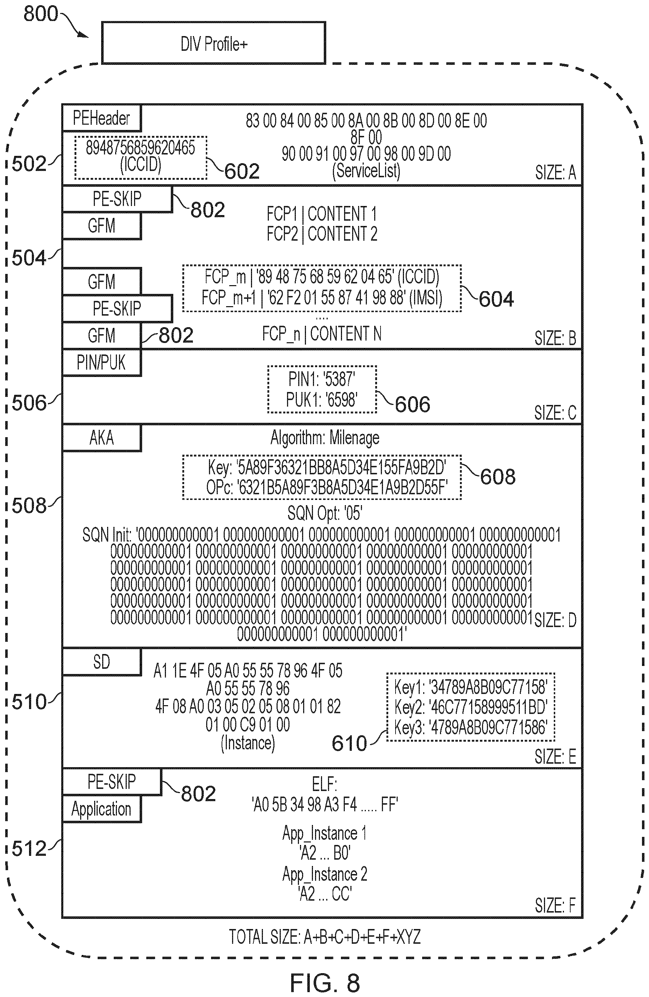

**Fig. 8** shows another illustrative embodiment of an extended diversified profile 800, referred to as "DIV Profile+". Again, diversified data 602, 604, 606, 608, 610 have been inserted into the placeholders of the skeleton profile as shown in Fig. 5. The diversified data 602, 604, 606, 608, 610 are data which are specific to the profile loaded into the secure element. As mentioned above, the diversified data contain, for example, secret keys, an ICCID, and an IMSI. In addition, the extended diversified profile 800 contains a second marker 802 of the kind set forth above, which is named "PE-SKIP". In particular, the second marker 802 precedes non-diversified data which are contained in the diversified profile 800. By means of the second marker 802 a processing unit of an eUICC may easily detect the presence of the non-diversified data, and thus refrain from processing them. This may result in a performance improvement of the eUICC, in the sense that the diversified profile 800 may be loaded more quickly on the eUICC.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE NUMBERS

- 100: secure element
- 102: storage unit
- 104: processing unit
- 200: method of configuring a secure element
- 202: providing a secure element with a storage unit configured to store a pre-loaded data structure for a profile, wherein the pre-loaded data structure comprises first data and one or more placeholders for second data, wherein said first data are common data, and said second data are data which are specific to the profile
- 204: providing the secure element with a processing unit configured to insert, upon receipt of a profile containing the second data from an external entity, said second data into the placeholders
- 300: process for loading a profile
- 302: mobile network operator
- 304: eUICC manufacturer
- 306: set of eUICCs
- 308: device manufacturer
- 310: subset of eUICCs
- 400: sub-steps of process for loading a profile
- 402: eUICC manufacturer
- 404: set of eUICCs
- 406: device manufacturer
- 500: skeleton profile
- 502: PE header
- 504: GFM
- 506: PIN/PUK
- 508: AKA
- 510: SD
- 512: application
- 514: dummy value
- 516: dummy value
- 518: dummy value
- 520: dummy value
- 522: dummy value
- 600: diversified profile
- 602: diversified data
- 604: diversified data
- 606: diversified data
- 608: diversified data
- 610: diversified data
- 700: extended diversified profile
- 702: marker
- 800: extended diversified profile
- 802: marker

## Claims

1. A secure element, comprising:
a storage unit configured to store a pre-loaded data structure for a profile, wherein the pre-loaded data structure comprises first data and one or more placeholders for second data, wherein said first data are common data, and said second data are data which are specific to the profile;
a processing unit configured to insert, upon or after receiving said profile including the second data from an external entity, said second data into the placeholders.

2. The secure element of claim 1, wherein the placeholders contain dummy data, and wherein the processing unit is configured to substitute, upon or after receiving said profile, the dummy data with the second data.

3. The secure element of any preceding claim, wherein the second data contain one or more secret keys.

4. The secure element of any preceding claim, wherein the second data contain a unique identifier of the secure element.

5. The secure element of any preceding claim, wherein the processing unit is further configured to remove the pre-loaded data structure from the storage unit upon or after receiving an instruction from the external entity.

6. The secure element of any preceding claim, wherein the storage unit is a non-volatile memory.

7. The secure element of any preceding claim, wherein the first data contain an applet code.

8. The secure element of any preceding claim, being an embedded universal integrated circuit card, eUICC.

9. The secure element of any preceding claim, wherein the processing unit is configured to detect one or more first markers in the received profile, wherein said first markers precede the second data contained in said profile.

10. The secure element of any preceding claim, wherein the processing unit is configured to detect one or more second markers in the received profile, wherein said second markers precede the first data contained in said profile.

11. The secure element of any preceding claim, wherein the second data are diversified data which are unique for the profile.

12. A method of configuring a secure element, comprising:
providing the secure element with a storage unit configured to store a pre-loaded data structure for a profile, wherein the pre-loaded data structure comprises first data and one or more placeholders for second data, wherein said first data are common data, and said second data are data which are specific to the profile;
providing the secure element with a processing unit configured to insert, upon or after receiving said profile including the second data from an external entity, said second data into the placeholders.

13. The method of claim 12, wherein the placeholders contain dummy data, and wherein the processing unit is configured to substitute, upon or after receiving said profile, the dummy data with the second data.

14. The method of claim 12 or 13, wherein the second data contain one or more secret keys.

15. The method of any one of claims 12 to 14, wherein the second data contain a unique identifier of the secure element.

## Amended claims

### Amended claims in accordance with Rule 137(2) EPC.

1. A secure element, comprising:
a storage unit configured to store a pre-loaded data structure for a profile, wherein the pre-loaded data structure comprises first data and one or more placeholders for second data, wherein said first data are common data, and said second data are data which are specific to the profile;
a processing unit configured to insert, upon or after receiving said profile including the second data from an external entity, said second data into the placeholders;
wherein the placeholders contain dummy data, and wherein the processing unit is configured to substitute, upon or after receiving said profile, the dummy data with the second data.

2. The secure element of claim 1, wherein the second data contain one or more secret keys.

3. The secure element of any preceding claim, wherein the second data contain a unique identifier of the secure element.

4. The secure element of any preceding claim, wherein the processing unit is further configured to remove the pre-loaded data structure from the storage unit upon or after receiving an instruction from the external entity.

5. The secure element of any preceding claim, wherein the storage unit is a nonvolatile memory.

6. The secure element of any preceding claim, wherein the first data contain an applet code.

7. The secure element of any preceding claim, being an embedded universal integrated circuit card, eUICC.

8. The secure element of any preceding claim, wherein the processing unit is configured to detect one or more first markers in the received profile, wherein said first markers precede the second data contained in said profile.

9. The secure element of any preceding claim, wherein the processing unit is configured to detect one or more second markers in the received profile, wherein said second markers precede the first data contained in said profile.

10. The secure element of any preceding claim, wherein the second data are diversified data which are unique for the profile.

11. A method of configuring a secure element, comprising:
providing the secure element with a storage unit configured to store a pre-loaded data structure for a profile, wherein the pre-loaded data structure comprises first data and one or more placeholders for second data, wherein said first data are common data, and said second data are data which are specific to the profile;
providing the secure element with a processing unit configured to insert, upon or after receiving said profile including the second data from an external entity, said second data into the placeholders;
wherein the placeholders contain dummy data, and wherein the processing unit is configured to substitute, upon or after receiving said profile, the dummy data with the second data.

12. The method of claim 11, wherein the second data contain one or more secret keys.

13. The method of claim 11 or 12, wherein the second data contain a unique identifier of the secure element.
